# EUROPEAN PATENT APPLICATION

(11) **EP 1 997 944 A1**
(43) Date of publication of application: **03.12.2008**
(21) Application number: 07009543.5
(22) Date of filing: 11.05.2007
(51) Int. Cl.: D04H 13/00, D04H 1/42, G01N 23/06, G01N 23/16

(54) **Method of making mineral wool**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The invention provides a method for making a mineral wool product, the method comprising making a mineral melt and forming the melt into fibers, collecting the fibers together with binder as a primary web, consolidating the primary web to form a secondary web and curing the binder, characterised in that
after formation of the primary web and before curing a plurality of measurements of area weight are taken substantially simultaneously by X-ray attenuation, at a plurality of positions ranging across substantially the entire width of either the primary or the secondary web, or both,
and the plurality of area weight measurements are used to control at least one process parameter at a position in the process prior to or after the measurement is taken.

## Description

The invention relates to methods of making bonded mineral wool products. It also relates to systems suitable for use in such methods.

It is known to make mineral wool products by a process comprising providing a mineral melt, fiberising the melt and collecting the fibers in the form of a primary web which also contains binder and consolidating the primary web, by cross lapping and/or other consolidation methods, and then curing the web and cutting the cured web into products of the defined and required size.

One major problem which is, and has been for many years, of concern to manufacturers, is that of quality control. It is often critical to obtain a series of products which are highly uniform in their in-product properties and exhibit low variation between products.

For instance, during the process there can be generated non-uniformities in density, in particular across the width of the web, and/or non-uniformity in thickness across the width of the web. It is often desirable to minimise non-uniformity within a single product. It is also often desirable to minimise variation between products.

For instance, minimising such variation across a batch of individual products is particularly important when the product being made is a horticultural growth substrate. In such cases it is technically highly important that the products produced have very low variation in their properties. The end users (growers) need systems which can enable them to harvest a huge number of plants of the same size and at the same growth stage at essentially the same time. Thus, they have a need to minimise variation introduced by the growth substrate. For manufacturers of such products, obtaining low variation is highly important, as this is a factor which must be reported to the end users. Obtaining uniform properties across the entire width of a web and the final product is very important in this case, as each individual growth substrate product can be of rather small dimensions, and so a large number of individual substrate products may be cut from a single width of web.
Uniformity of area weight and low variation in area weight across a series of products are both also especially important in the case of insulation products, where it is necessary for manufacturers to provide guarantees of insulation value and density.

Similarly, when a product is intended for use in fire protection, it is necessary for a manufacturer to be able to guarantee that an individual product does not contain any areas of low density or low thickness which would be susceptible to burn-through.

It would also be desirable to be able to ensure that the width of the secondary web is as close as possible to the intended final width of the product batt, so as to minimise the amount of wool which has to be cut off the product before it is complete (and which is thus waste wool). It is of course not possible to modify a secondary web whose width is too low, and so in current processes it is necessary to overcompensate to ensure that no secondary web is produced which is below the required width. This has the effect that there is wastage of wool. It would be desirable to be able to more closely control, by the processing parameters, the width of the second web so as to minimise the over-compensation necessary.

Generally, in the past, systems which have been devised for quality control and consequent product control have not been satisfactory.

One known system for quality control involves use of isotope-based systems. A point source of radiation directs an appropriate beam of radiation at one face of the relevant product and a detector positioned on the opposite side of the product enables attenuation of the radiation through the product to be detected. This can be used to determine the area weight of the product.

This method allows measurement of area weight but has the disadvantage that a single measurement takes a considerable time, usually tens of seconds. It is also normal to carry out the quality control measurement offline, and normally on a final product. These features mean that it is very difficult to make alterations to the process in a rapid manner in order to react to any variations in area weight which are detected, either within a product or across a batch of products.

Another approach to ensuring that all necessary final product characteristics are met is to choose production settings so as to ensure that area weight can always be above the desired area weight. However, this has the effect of meaning that the area weight may, in large numbers of individual products produced, be unnecessarily high, thus being wasteful of energy and materials.

Therefore it would be desirable to provide a method of producing mineral wool products which could allow excellent and convenient quality control and which would enable, if necessary, modification of any individual product whose area weight parameters are outside predetermined ranges in real time. It would be desirable to provide such a system which is capable of operating with products having a range of predetermined area weights, since it is not unusual for different products to be produced on a single line.

According to the invention we provide a method of making a mineral wool product, comprising making a mineral melt and forming the melt into fibers, collecting the fibers together with binder as a primary web, consolidating the primary web to form a secondary web and curing the binder, characterised in that
after formation of the primary web and before curing a plurality of measurements of area weight are taken by X-ray attenuation, at a plurality of positions ranging across substantially the entire width of either the primary or the secondary web, or both, and the plurality of area weight measurements are used to control at least one process parameter at a position in the process prior to or after the measurement is taken.

The invention also provides apparatus for the formation of a mineral wool product, comprising
a furnace for forming a mineral melt from a mineral charge,
a fiberising apparatus for forming the melt into fibers,
a collecting conveyor on which the formed fibers can be collected together with binder as a primary web,
a device for consolidating the primary web to form a secondary web and
a device for curing the binder,
characterised in that the apparatus also comprises, at a position after the collecting conveyor and before the curing apparatus,
one or more X-ray sources arranged to direct X-rays at the primary and/or secondary web, and
one or more collectors for collecting X-ray radiation arranged to collect X-ray radiation which has passed through the said web or webs,
whereby the X-ray source or sources and the collector or collectors are arranged to take a plurality of measurements of area weight by X-ray attenuation, at a plurality of positions ranging across substantially the entire width of either the primary or the secondary web,
and the apparatus includes means for using the plurality of area weight measurements to control at least one process parameter at a position in the process prior to or after the measurement is taken.

By the use of this system it is possible to obtain online information about product quality, by means of area weight measurements, and by means of a feedback or feed forward system use the measurements obtained to modify process parameters so as to correct area weight to within a predetermined desired range. An advantage of the system of the invention is that it is easily possible to calibrate the X-ray attenuation system for a wide variety of mineral wool types, compositions and densities.

With the use of the invention it is possible to obtain extremely high uniformity in the area weight across the width of a batt, which is particularly valuable when the final product is of small size cut from a wide batt. In this case the high uniformity across the width of a batt contributes to low variation in area weight between products. In all cases the invention allows provision of low variation in area weight between the products. The invention also allows the provision of very high uniformity in the area weight across the width of a batt, which has the advantages discussed above in connection with products of large area. It is thus with the invention possible to be confident that critical requirements for insulation and fire protection values are met without the necessity of erring on the high side of area weight values, and thus save significantly on energy and materials. For instance, use of the method of the invention can allow savings of up to 4% in energy and materials. Evidently, in the context of a fast moving commercial process of the type defined in the invention such a saving can be very significant.

According to the invention, a series of area weight measurements are obtained simultaneously across the width of a primary or secondary web as it is travelling. Thus all the measurements are at essentially the same longitudinal coordinates. Area weight is determined as a result of measuring the attenuation of X-rays passed through the web. The greater the attenuation the greater the area weight. A web of predetermined (known) density will show greater attenuation if it is thicker than if it is thinner. Conversely, two webs of the same thickness will show different attenuation, proportional to their densities.

In the invention, there is provided at least one source of X-rays directed at one surface of the travelling web. Preferably the source (or sources) is a point source, although it is also possible to use band sources. At the opposite surface of the web is positioned a corresponding number of detectors, which detect X-rays which have passed through the travelling web. Preferably a single source is used, although it is also possible to use a plurality of sources provided that a plurality of detectors are also provided at the opposite face of the web, and provided the system is set up so as to avoid interference.

It is possible to use known forms of apparatus in the invention. Sources of X-rays and appropriate detectors are known. For instance, simple methods are described by Badel et al in "Quantitative Microtomography: Measurement of Density Distribution in Glass Wool and Local Evolution During a One-Dimensional Compressive Load", Meas. Sci. Technol. 14 (2003) 410-420, and Letang et al in "Signal-To-Noise Ratio Criterion for the Optimisation of Dual-Energy Acquisition Using Virtual X-Ray Imaging: Application to Glass Wool", Journal of Electronic Imaging, July 2004, vol 13(3), 436-449. The methods disclosed in these publications are simple methods carried out on stationary samples of glass wool but it is possible to apply the same principles in the method of the invention.

EP766814A describes the use of an X-ray source to determine the density profile of a plate form material whose density varies over the thickness. The material is normally wood and this system is described in the context of production methods in wood panel factories. However, the apparatus is generally applicable in the invention, with appropriate modifications. According to EP766814A, variation of density through the thickness is measured, rather than variation of area weight across the width. This is done by measuring attenuation and refraction of X-rays.

Forms of apparatus are commercially available which can be adapted for use in the invention, for instance from GreCon under the trade names BWS3000, BWQ3000, Dieffensor and StenOgraph. As in EP766814A, these forms of apparatus are generally promoted for uses such as determining density profile across thickness of (and existence of foreign bodies in) wood panels. It is mentioned in brochures for BWQ3000 and Dieffensor that they can be used for mineral wool, in general terms.

A further form of apparatus which can be suitable for use in the invention is the X-Force Scan apparatus available from Force Technology.

According to the invention the strength of the X-ray source is chosen so as to be appropriate for the expected general density range of the web on which the measurements are taken.

It is also necessary to choose the appropriate height of the source to ensure that measurements can be taken substantially across the width of the travelling web.

The X-rays pass through the travelling web and are detected with a detector device positioned on the opposite side of the travelling web. The detector device can be generally along conventional lines. It is important that the resolution is sufficiently high to allow detection of an X-ray signal at a plurality of different points across the width of the travelling web, hence allowing calculation of area weight at a plurality of points across the width. Preferably the detector is formed of at least 10, preferably at least 100, more preferably at least 500 or at least 1000, up to 1500 or more elements per metre, each element being arranged to generate a single data point. The information from each element is used to generate a single area weight measurement.

Preferably the elements are of small size to maximise the resolution. Preferably they are not more than 5 cm, in particular not more than 2 or not more than 1.5 cm, and especially not more than 5 or even not more than 1 mm in width (width being measured in the same direction as the width of the travelling web, transverse to the direction of travel).

The reading of the output of each element takes as short a time as technically possible, usually not more than 1 second, preferably not more than 100 milliseconds, more preferably not more than 10 milliseconds.

In standard manner, apparatus and software are provided so that the collected X-ray signals can be correlated with an area weight of the travelling web at the relevant point. It is generally assumed, for the purposes of such calculations, that density is not variable throughout the thickness. Evidently, in particular when a point source is used, the path length must be taken into account.

Thus a matrix of data points is obtained, showing the area weight distribution across the width of the web, and this is used to generate information about the density profile of the travelling web in real time and/or a thickness profile of the travelling web in real time.

In the method of the invention a primary web is formed which contains binder. This web is subsequently cured to harden the binder, often by heating in a curing oven.

It is possible to take the area weight measurements at any point after formation of the primary web and before curing. The primary web is said to have been formed at the point at which the fibers produced by the fiberisation step have settled onto a conveyor.

The primary web may be consolidated, before curing, into a secondary web. Consolidation may have the effect of making the primary web into a secondary web which is thicker and/or more dense and/or having more heterogeneous internal structure.

Consolidation may for instance be effected by known methods such as cross lapping, which is often carried out using a pendulum system.

Alternative consolidation methods include compression, either longitudinal compression in the direction of travel or height compression (in the vertical direction) transverse to the direction of travel. For instance, this could involve a pre-compression step just prior to the curing oven, and/or a step of substantial longitudinal compression, and/or a step of substantial height compression.

Another consolidation method involves applying suction to the conveyor on which the primary web is transported. This usually has the effect of increasing the density of the web.

Another consolidation method involves collecting a primary web in the form of loose rolls and then consolidating by collecting these loose rolls and winding them around a tine. This is valuable in particular for production of products which are in the form of a pipe section.

The process of the invention may also include dividing the web (usually the secondary web) parallel to its major surfaces into two or more sub-webs. One of the sub-webs is then treated to modify its properties, usually density, for instance by length compression and/or height compression. The two or more sub-webs are then rejoined.

According to the invention, area weight measurements are taken across substantially the entire width of the travelling web. Measurements representative of at least 80%, generally at least 90 or at least 95%, and generally substantially 100% of the width of the web are taken.

In the invention it is generally intended that any individual final product after curing has a highly homogenous area weight distribution across its width. The invention allows for the achievement of such homogeneity. Thus, in the invention, in the final product after curing there is preferably not more than 20% variation in area weight across the width, more preferably not more than 15%.

Alternatively, the invention can be used in a process where it is deliberately intended to obtain heterogenous area weight distribution across the width of an individual final product.

When area weight measurements are taken on a primary web which is subsequently consolidated, variation in area weight/density across the width of this web will be exhibited as variations in density across the thickness of the final consolidated web.

The system of the invention allows information on area weight of the primary web to be obtained in real time and the obtained data is used to control a parameter of the process before or after the point at which the measurements are taken.

Thus, the data on area weight obtained from the X-ray attenuation data is used to decide what a parameter of the process should be. For instance, the data may result in a modification of a process parameter from a value at which it was operating prior to the receipt of the data. Alternatively, the data may be used to fix a particular parameter at an optimised value.

Any particular parameter may, for instance, have a predetermined range of acceptable values. The data obtained from the X-ray attenuation measurements can be used to fix where in the predetermined range the parameter should lie for part or all of a process run.

The parameter may be a parameter of a prior consolidation system. It may for instance relate to the degree of suction applied to the conveyor, where suction is applied as part of the consolidation process.

It may relate to the degree of height and/or length compression where compression is used as part or all of the consolidation process.

The parameter may be one of the operating parameters of a subsequent pendulum system, e.g. the speed of the stroke, the conveyor height, the length of the stroke, the speed of the receiving conveyor.

The parameter may be a parameter of the process in the spinning chamber. For instance, it may be a parameter which controls the amount of fiber laid down to form the primary web. It may relate to the speed of the collecting conveyor in the spinning chamber.

Parameters of the spinning process include: the rate of flow of melt into or onto the spinning apparatus; the angle at which the stream of melt first contacts the top rotor (in a cascade spinner); the flow field of gas emanating from a cascade spinning apparatus which carries the cloud of fibres to the collecting conveyor.

The process parameter may be a parameter later in the process, for instance a parameter relating to a compression or decompression of the primary or already-consolidated secondary web prior to or, less usually, after the curing oven.

If the area weight measurements are taken at some point after a secondary web has been formed, likewise the parameter which is modified or maintained in response to the measurements may be prior to this, i.e., it may be a parameter relating to formation of of treatment of the primary web, as above. Alternatively it may be a parameter relating to formation of or treatment of the secondary web, for instance a setting of the pendulum system or other consolidation system.

Similarly, it may also relate to a treatment of an already consolidated web, for instance compression or decompression, before or after the curing oven.

The process parameter may relate to a sorting step. Thus, the area weight measurements may be used to sort the final product at the end of the line into products which are acceptable and those which are not.

In the invention, the X-ray attenuation method may also be used to determine the presence of impurities in the web.

The process parameter determined may be a parameter relating to the step of final cutting of waste wool from the sides of the web. This can be done by using the area weight measurements to calculate the width of the secondary web (by showing at which point the area weight begins dropping towards zero). Alternatively, processes in which the area weight measurements reveal the width of the secondary web can be used to control parameters prior to the measurement which influence the width of the web formed. This allows the web formed to be as close as possible to the final intended width, thus minimising the amount of waste wool which is required to be cut off.

In the invention, two or more process parameters may be controlled as a result of the area weight determination.

The invention is particularly valuable for the production of mineral wool products which are horticultural growth substrate products, insulation products (heat and/or sound insulation including ceiling boards) or fire protection or acoustic products, for the reasons given above.

In the invention, the final products are often cut from a cured final web and the invention is particularly useful when the product has a width or a thickness less than the width or the thickness of the total web and thus the web must be cut into sections less than its full width or thickness. Homogeneity of density and area weight across width and thickness are particularly important in these circumstances.

The invention can be used to control the final gross weight of the mineral fiber product.

Preferably the total width of the final web from which the products are formed is at least 1.2 m, more preferably at least 2m, and can be at least 2.4 m.

The products produced may have any appropriate average density, for instance in the range 10 to 1500 kg/m³. Horticultural growth substrate products generally have density in the range 20 to 100 kg/m³.

The measurements by X-ray attenuation may be carried out on a web having any density within this range.

The area weight range for a primary web can be from 200 to 10000 g/m². Primary webs having area weight in the range 200 to 3000 g/m² are usually consolidated to much higher density. Primary webs can also be produced which themselves have relatively high density, such as in the range 2 to 10 kg/m², often not more than 7 kg/m². The area weight range for a consolidated secondary web is usually 1 to 50 kg/m².

The invention is particularly valuable when the production line is a high speed line. Thus in the invention it is preferred that the primary web travels at a speed of at least 100, preferably at least 200, more preferably at least 250 m/min. If the process involves formation of a secondary web, for instance by a consolidation method such as cross lapping, then preferably this travels at a speed of at least 2, more preferably at least 20, more preferably at least 40 m/min.

The fibers which form the primary web can be made in any known manner. Generally a charge of mineral materials is melted in a furnace to form a mineral melt. This mineral melt is supplied to fiberising apparatus and fibers are formed. Such fiberising apparatus generally comprises at least one fiberising rotor into or onto which the mineral melt is supplied and from which it is flung as fibers. The rotor or rotors may each be mounted around a vertical axis for rotation, such as in the spinning cup type of apparatus. Alternatively they may each be mounted around a horizontal axis for rotation, for instance as in the well known cascade spinner apparatus which comprises at least 2, generally at least 3, and usually 4 rotors. Melt is poured onto the first rotor and flung from that partially as fibers and partially as melt which is carried onto the second rotor, from which it is flung partially as fibers and partially as melt onto the third rotor, etc.

The mineral wool may be of any known type. For instance it may be glass wool, stone wool or slag wool.

Suitable compositions for the fibers include:
SiO₂ 30 to 70%
Al₂O₃ 1 to 32%
FeO (total iron oxides, measured as FeO) 1 to 15%
CaO 5 to 35%
MgO 2 to 20%
Na₂O 0 to 15%
K₂O 0 to 15%
P₂O₅ 0 to 15 %
Other 0 to 10%

The fibres produced in the invention can have high aluminium content (measured by weight of Al203), namely at least 14%, preferably at least 15%, more preferably at least 16% and in particular at least 18%. Generally the amount of aluminium is not more than 35%, preferably not more than 30%, more preferably not more than 26 or 23%.

In general the fibres and the melt from which they are formed have an analysis (measured as % by weight of oxides) of other elements within the various ranges defined by the following normal and preferred lower and upper limits:
SiO2: at least 30, 32, 35 or 37; not more than 51, 48,
45 or 43
CaO: at least 8 or 10; not more than 30, 25 or 20
MgO: at least 2 or 5; not more than 25, 20 or 15
FeO (including Fe2O3): at least 2 or 5; not more than
15, 12 or 10
FeO+MgO: at least 10, 12 or 15; not more than 30, 25
or 20
Na2O+K2O: zero or at least 1; not more than 10
CaO+Na2O+K2O: at least 10 or 15; not more than 30 or
25
TiO2: zero or at least 1; not more than 6, 4 or 2
Ti02+FeO: at least 4 or 6; not more than 18 or 12
B203: zero or at least 1; not more than 5 or 3
P2O5: zero or at least 1; not more than 8 or 5
Others: zero or at least 1; not more than 8 or 5

It is preferred that the amount of iron in the fibers is from 2 to 15%, preferably 5 to 12%.

Suitable compositions for stone wool fibers include those described in WO96/14274 and WO96/14454.

The following is a preferred glass wool fiber composition (all amounts given as wt%):
Si02: 55-70;
Al2O3: 0-7;
B203: 3-12;
K2O: 0-2.5;
Na2O: 13-18;
MgO: 0-5;
CaO: 5-13;
TiO2: 0-0.5;
Li2O: 0-0.5;
SO3: 0-0.5;
F2: 0-1.5;
BaO: 0-3.

In the process binder is applied to the fibers during or after their formation so as to be part of the web and the measurements are taken before curing of binder. The product is generally provided with a binder to give integrity to the product. It may be a conventional heat-curable (thermosetting), hydrophobic binder. Preferred binders are curable formaldehyde resins such as phenol formaldehyde, urea formaldehyde and phenol urea formaldehyde resin. Others include hydrophilic binders and formaldehyde-free binders, for instance of the polyacrylic type or ester type or amide type.

### Brief description of the drawings

Figures 1a and 1b give a schematic view of a process of producing mineral wool illustrating points at which the area weight measurements can be taken.
Figure 2 is a side view of apparatus for taking the area weight measurements.
Figure 3 is a front view of apparatus for taking the area weight measurements.

### Detailed description of the drawings

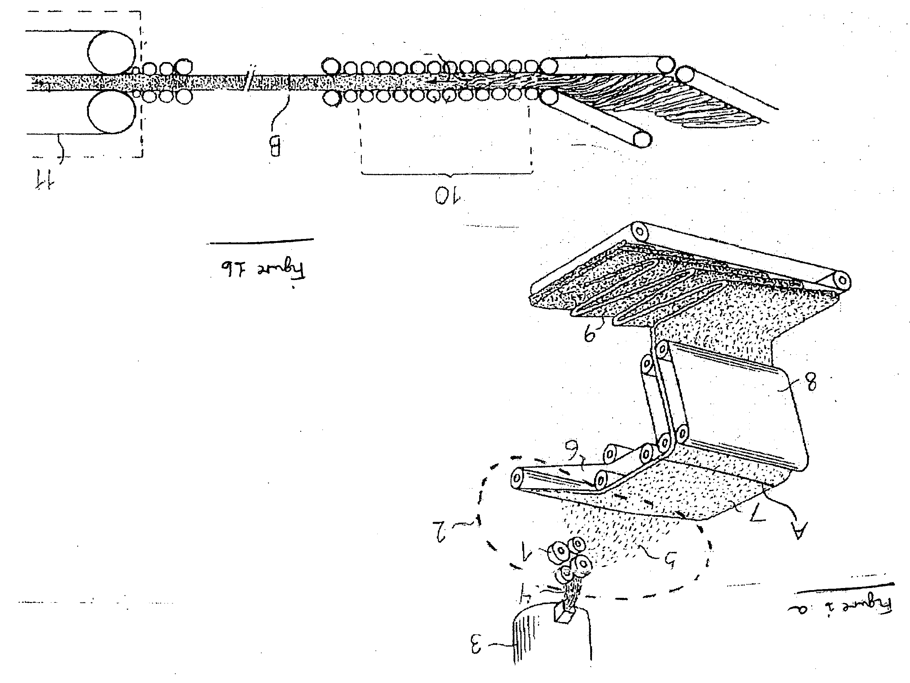

Figure 1 a shows the fiberising apparatus 1, which is afour-rotor cascade spinner. This is positioned in a spinning chamber 2 (shown only schematically). Melt 4 is formed in a furnace 3 and is poured onto the top rotor of the cascade spinner 1. The spinner forms a cloud 5 of fibers from the melt. These fibers are collected on a conveyor 6 as a primary web 7. This primary web is then transported to a pendulum system 8 at which it is consolidated in a first stage by crosslapping to form a secondary web 9. Now referring to Figure 1b, the secondary web 9 is then transported to consolidation apparatus 10, in which it is further consolidated for instance by longitudinal compression or height compression. The further consolidated web is then passed to a curing device 11, usually referred to as a curing oven.

Positions A and B are two example positions at which the X-ray attenuation measurements can be taken. Position A gives measurements across the width of the primary web. Position B gives measurements across the width of the secondary web.

X-ray attenuation measurements taken at position A give an indication of the area weight distribution across the width of the primary web. This information is used to determine, for instance, whether the area weight distribution across the width is sufficiently uniform or, for instance, whether the area weight distribution shows low enough variation over time. In this latter case, it will be necessary to compare the area weight measurements taken at different times.

When measurements are taken in position A the measurements may be used to control one or more parameters in the process prior to or after position A. Examples include parameters in the spinning chamber. Alternatively, the information may be used to control the parameters of the pendulum apparatus 8.

When measurements are taken at position B this can be used to control parameters in the process prior to or after the position B. For instance, it may be used to control parameters of the pendulum system 8 or of the further consolidation system 9.

In both cases the control may simply be maintaining the parameter at its current value, if the area weight distribution revealed is such that it is acceptable. Alternatively, the control may involve modification of the parameter to take into account an unacceptable measurement of area weight distribution, the parameter being changed so as to modify the area weight distribution.

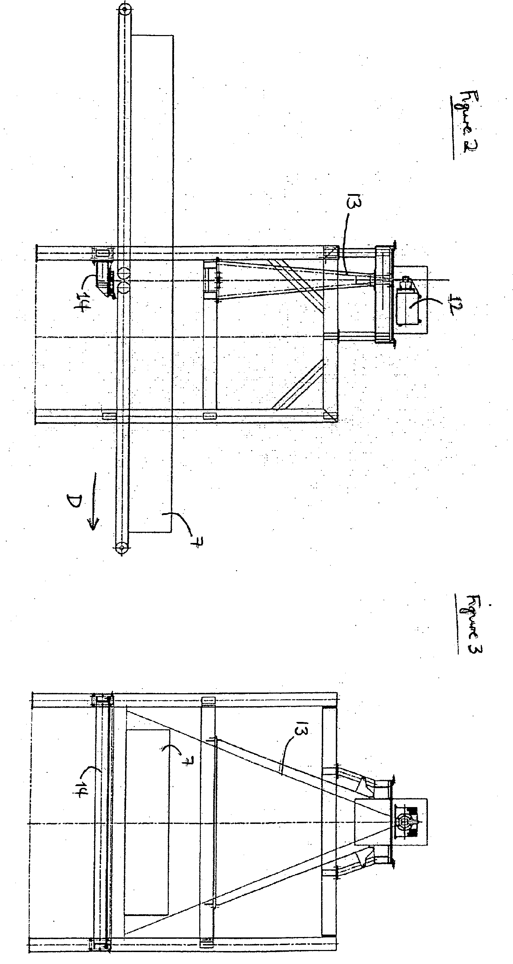

Figure 2 shows the positioning of the X-ray attenuation measurement apparatus from the side, where the arrow D shows the direction of movement of the mineral wool web. In Figure 3 the apparatus is shown from the front, in which the mineral wool web is moving out of the plane of the drawing.

The X-ray source 12, in this case a single point source, directs an X-ray beam 13 downwardly through the web 7. The collector 14 detects the X-rays which pass through the web 7. The collector data is sent to a processor for analysis and the analysed data used to control the process as described above.

## Claims

1. A method of making a mineral wool product, comprising making a mineral melt and forming the melt into fibers, collecting the fibers together with binder as a primary web, consolidating the primary web to form a secondary web and curing the binder, **characterised in that**
after formation of the primary web and before curing a plurality of measurements of area weight are taken substantially simultaneously by X-ray attenuation, at a plurality of positions ranging across substantially the entire width of either the primary or the secondary web, or both,
and the plurality of area weight measurements are used to control at least one process parameter at a position in the process prior to or after the measurement is taken.

2. A method according to claim 1 in which the primary web is consolidated, before curing, into a secondary web using a pendulum system.

3. A method according to claim 1, in which the measurements of area weight are taken across the primary web and the process parameter is one of the operating parameters of a subsequent consolidation system.

4. A method according to claim 1, in which the measurements of area weight are taken across the secondary web and the process parameter is one of the operating parameters of a position in the process prior to the position at which the measurements are taken.

5. A method according to any preceding claim, in which the process parameter is a parameter of the process in the spinning chamber.

6. A method according to claim 5 in which the process parameter is selected from the group consisting of: (a) the rate of melt flow to a spinner; (b) the position of the fiberising rotor, or at least one of the fiberising rotors, on a spinner with respect to the position of the feed of melt to that spinner; (c) the acceleration field or fields on a spinner; (d) the flow field of the or each stream of air associated with a spinner.

7. A method according to any preceding claim in which the process parameter is a parameter relating to a longitudinal compression or height decompression of the primary or secondary web.

8. A method according to any preceding claim in which the mineral wool product is a horticultural growth substrate product, an insulation product, a fire protection product, or an acoustic product.

9. A method according to any preceding claim in which the primary web travels at a speed of at least 100, preferably at least 200, more preferably at least 250 m/min.

10. A method according to any preceding claim in which the process involves formation of a secondary web which travels at a speed of at least 20, more preferably at least 40 m/min.

11. An apparatus for the formation of a mineral wool product, comprising
a furnace for forming a mineral melt from a mineral charge,
a fiberising apparatus for forming the melt into fibers,
a collecting conveyor on which the formed the fibers can be collected together with binder as a primary web,
a device for consolidating the primary web to form a secondary web and a device for curing the binder,
**characterised in that** the apparatus also comprises, at a position after the collecting conveyor and before the curing apparatus,
one or more X-ray sources arranged to direct X-rays at the primary and/or secondary web
one or more collectors for collecting X-ray radiation arranged to collect X-ray radiation which has passed through the said web or webs,
whereby the X-ray source or sources and the collector or collectors are arranged to take a plurality of measurements of area weight by X-ray attenuation, at a plurality of positions ranging across substantially the entire width of the primary and/or the secondary web,
and the apparatus includes means for using the plurality of area weight measurements to control at least one process parameter at a position in the process prior to or after the measurement is taken.

12. Use of an apparatus according to claim 11 to make a mineral wool product having a heterogeneous area weight distribution.

13. Use of an apparatus according to claim 11 to control the gross weight of cured mineral products.
